# FASCICULE DE BREVET EUROPEEN

(11) **EP 3 797 275 B1**
(45) Date de publication et mention de la délivrance du brevet: **10.05.2023**
(21) Numéro de dépôt: 19734848.5
(22) Date de dépôt: 14.05.2019
(51) Int. Cl.: G01L 19/14

(54) **BOITIER DE PROTECTION D'UN DISPOSITIF ELECTRONIQUE**
GEHÄUSE ZUM SCHUTZ EINER ELEKTRONISCHEN VORRICHTUNG
HOUSING FOR PROTECTING AN ELECTRONIC DEVICE

(30) Priorité: 22.05.2018 FR 1854246
(43) Date de publication de la demande: 31.03.2021
(73) Titulaire: A. Raymond et Cie, 38000 Grenoble (FR)
(72) Inventeur: MBAYE, Mansour, 38430 Moirans (FR); SCHOELZEL, Christian, 79369 Wyhl am Kaiserstuhl (DE); RAT, Julien, 38140 Rivier Apprieu (FR); JESSLEN, Jean-Luc, 68500 Berrwiller (FR)
(74) Mandataire: IP Trust
(86) Numéro de dépôt international: PCT/FR2019/051094
(87) Numéro de publication internationale: WO 2019/224453

(56) Documents cités:
- US-A1- 2004 177 697

## Description

### DOMAINE DE L'INVENTION

La présente invention concerne un boitier de protection d'un dispositif électronique, par exemple pour la mesure de pression. Le boitier et le dispositif électronique peuvent faire partie d'un capteur de pression pour équiper, par exemple, le réservoir d'un véhicule automobile.

### ARRIERE PLAN TECHNOLOGIQUE DE L'INVENTION

On connaît par exemple du document US2001029786 un capteur pour mesurer la pression interne d'un réservoir de carburant. Un composant transducteur sépare un premier volume dans lequel règne la pression du réservoir d'un second volume dans lequel règne la pression atmosphérique. Le composant est sensible à la différence de pression régnant entre ces deux volumes, et un dispositif électronique associé au film permet de fournir une mesure de cette pression relative.

Pour maintenir le second volume à la pression atmosphérique, il est usuel de prévoir une ouverture débouchant dans ce volume. Une membrane étanche, mais perméable aux gaz, est disposée sur l'ouverture pour la recouvrir. On prévient ainsi que de l'eau, ou plus généralement du liquide, remplisse ce second volume ce qui viendrait bien entendu perturber la mesure.

On cherche généralement à ce que la membrane soit fermement fixée au boitier définissant le second volume, afin d'éviter son décollement, alors qu'elle peut subir de fortes sollicitations mécaniques, par exemple sous l'effet d'un jet d'eau sous pression.

On cherche également généralement un équilibre de pression entre celles régnant dans le second volume et l'atmosphère afin d'assurer la fidélité de la mesure de pression du réservoir. On cherche notamment à éviter qu'un film de liquide ne vienne occulter la membrane étanche, ce qui ne permettrait plus alors à l'air de circuler librement dans et hors du second volume.

Ces problématiques sont largement documentées dans l'état de la technique. On pourra par exemple trouver dans les documents suivant une variété de solutions tendant à résoudre ces problèmes : US5528941, US5661244, US5692637, US5747694, US6506110, US6807864, US6964200, US6994621, US7055391, US7166024, US7406875, US7454976, US7465887, US7503784, US7568393, US7626129, US7743750, US8109148, US8246726, US8292109, US8375778, US8413496, US8505386, US8544333, US8814993, US8821226, US8869623, US9120059, US9255719, US9295949, US9332662, US9372102, US2012/0247179, US2015/0330421, US2017/0089794.

### OBJET DE L'INVENTION

L'invention vise à fournir, au moins en partie, une solution originale aux problèmes précités.

### BREVE DESCRIPTION DE L'INVENTION

En vue de la réalisation de ce but, l'objet de l'invention propose un boîtier de protection selon la revendication 1.

En combinant des cloisons de protection « en labyrinthe » autour de l'ouverture avec au moins une rainure d'évacuation, on peut positionner une membrane étanche sur l'ouverture du boîtier sans risquer d'occulter l'ouverture par une pellicule de liquide qui ne permettrait plus d'exposer une partie du dispositif électronique à la pression atmosphérique. On évite aussi la délamination de la membrane sous l'effet de contraintes mécaniques extérieures.

Selon d'autres caractéristiques avantageuses et non limitatives de l'invention, prises seules ou selon toute combinaison techniquement réalisable :
- la surface extérieure de la paroi principale définit un plan principal et dans lequel l'ouverture est disposée dans ce plan principal ;
- les cloisons sont perpendiculaires à la paroi principale ;
- des cloisons sont placées à une première distance de l'ouverture et d'autres cloisons sont placées à une deuxième distance de l'ouverture, plus grande que la première ;
- une première série de cloisons sont disposés autour de l'ouverture et sont séparés les unes des autres par des premiers passages, et une seconde série de cloisons est agencée en vis-à-vis des premiers passages pour que l'ouverture soit entièrement entourée par les cloisons ;
- la rainure est positionnée entre l'ouverture et une cloison ;
- une au moins des cloisons est formée d'un flanc d'un connecteur électrique.

L'objet de l'invention propose également un capteur de pression selon la revendication 8.

### BREVE DESCRIPTION DES DESSINS

D'autres caractéristiques et avantages de l'invention ressortiront de la description détaillée de l'invention qui va suivre en référence aux figures annexées sur lesquelles :

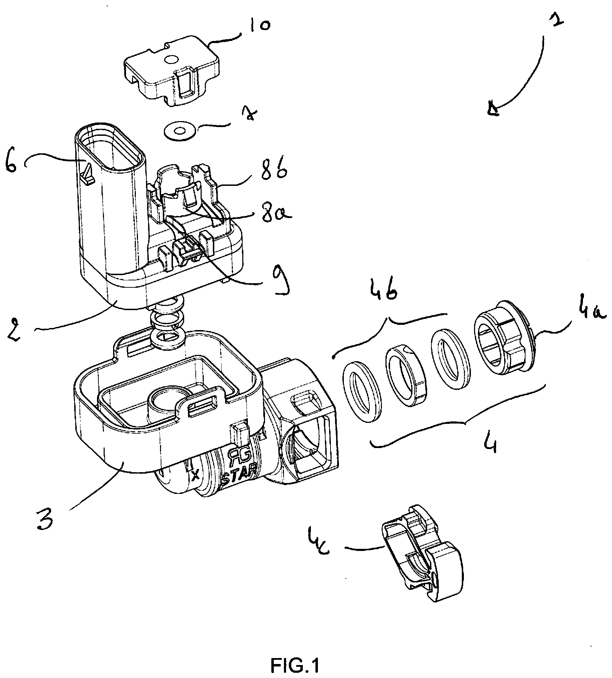

- La figure 1 représente une vue éclatée d'un capteur de pression employant un boîtier de protection conforme à l'invention ;
- la figure 2 représente une coupe d'un capteur de pression;
- la figure 3 représente une vue de dessus d'un boîtier de protection conforme à l'invention.

### DESCRIPTION DETAILLEE DE L'INVENTION

En référence aux figures, on présente un capteur de pression 1 mettant en oeuvre un boîtier de protection 2 d'un dispositif électronique 5 de mesure de pression relative. Le capteur 1 comprend un corps 3 définissant un premier volume 3a. Le corps 3 est muni d'un système d'étanchéité 4 permettant d'associer le capteur 1 à un réservoir dont on veut mesurer la pression interne, par exemple le réservoir d'un véhicule automobile. Sur l'exemple représenté sur les figures, le système d'étanchéité 4 est un connecteur femelle permettant d'encliqueter le capteur 1 sur un connecteur mâle du réservoir, par l'intermédiaire d'un verrou 4c. Un ensemble joints-rondelle 4b, maintenu dans le corps 3 par une bague 4a, en assure l'étanchéité. L'invention n'est toutefois nullement limitée au connecteur représenté, et tout mécanisme permettant de relier le capteur de pression au réservoir de manière à ce que la pression dans le premier volume soit bien celle du réservoir peut convenir.

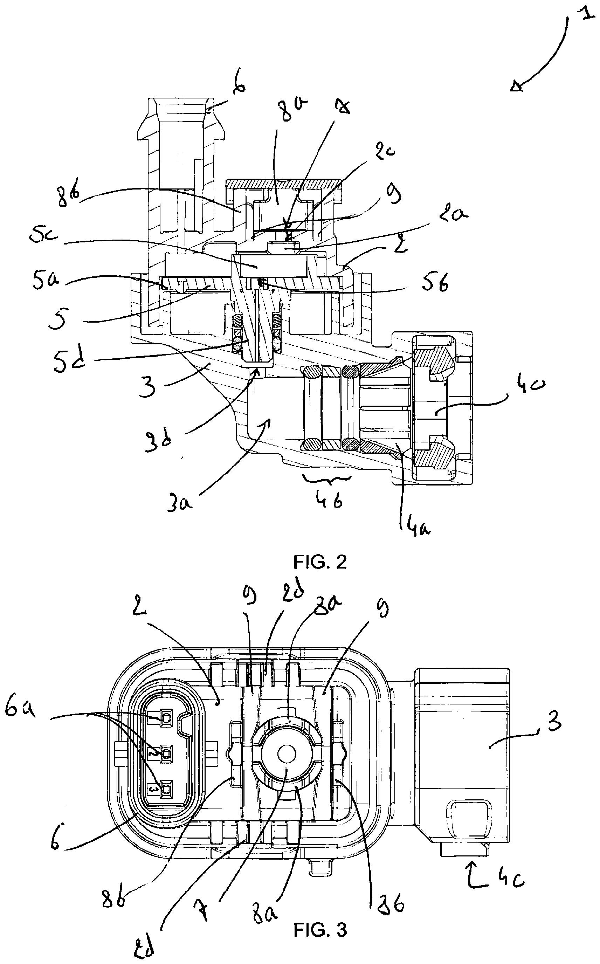

Le dispositif électronique 5 de mesure de pression relative est monté sur le corps 3. Dans l'exemple représenté sur la figure 2, ce dispositif comprend un support 5a du type PCB (« Printed Circuit Board » selon la dénomination anglo-saxonne) sur les faces duquel sont disposés les différents composants du dispositif. On trouve notamment un composant de transduction 5b sensible à la pression, placé au droit d'une ouverture du support 5a pour pouvoir exposer chaque face du composant à une pression qui peut être différente.

Une face du composant 5b est exposée à la première pression régnant dans le premier volume 3a du corps 3. Pour cela on a aménagé, dans le corps 3, un passage 3d entre le premier volume 3a et un alésage prévu pour recevoir un conduit 5d, par exemple un conduit en verre, du dispositif électronique 5. Le conduit 5d est assemblé au support 5, au droit du composant transducteurs 5b, et permet de faire circuler le fluide du premier volume 3a, à travers le passage 3d et jusqu'une première face du composant transducteur 5b. Un ensemble joint-rondelles disposé dans l'alésage du corps 3 assure l'étanchéité de la liaison entre le corps 3 et le conduit 5b, afin d'isoler entièrement le premier volume 3a, en communication avec le réservoir dont on souhaite mesurer la pression, de l'environnement extérieur.

Le dispositif électronique 5 est protégé par un boitier de protection 2. Ce boîtier 2 est formé de plusieurs parois définissant un logement dans lequel réside le dispositif électronique. Une partie au moins du logement constitue un deuxième volume 2a dans lequel on cherche à faire régner la pression atmosphérique, pour y exposer la seconde face du composant de transduction 5b. Le deuxième volume 2a peut être partiellement rempli d'un matériau de protection 5c, tel qu'un gel, disposés sur le composant transducteur 5b. Le deuxième volume 2a défini par le boitier de protection 2 est en communication avec l'environnement extérieur par l'intermédiaire d'une ouverture 2c aménagée sur une paroi, dite principale, du boitier 2. Sur l'exemple représenté sur les figures, les parois latérales du boitier 2 s'engagent dans une gorge périphérique aménagée sur le corps 3 de manière à refermer le logement sur le dispositif électronique 5 pour le protéger mécaniquement. Des pattes flexibles de fixation 2d, bien visibles sur la figure 3, permettent de retenir le boitier 2 au corps. On pourrait bien entendu envisager tout autre mécanisme de maintien du boitier 2 sur le corps 3. De préférence, la liaison entre le boitier 2 et le corps 3 est étanche, de manière à protéger le dispositif électronique 5 de l'intrusion d'eau ou de poussières. Dans ce cas, la seule communication entre l'intérieur du boitier et son environnement est donc l'ouverture 2c.

La mesure de pression relative établie par le dispositif électronique peut être fournie à des broches 6a d'un connecteur électrique 6, ici disposé sur la face principale du boitier 2.

Comme on l'a précisé en introduction, il est important de maintenir l'intérieur du second volume 2a à la pression atmosphérique. Pour cela, on a prévu de recouvrir l'ouverture 2c d'une membrane 7 étanche, hydrophobe et perméable au gaz. On peut de la sorte permettre à l'air extérieur de librement entrer et sortir à l'intérieur du logement et dans le second volume 2a par l'ouverture 2c de sorte que dans le deuxième volume 2a règne en permanence la pression atmosphérique.

La membrane étanche 7 évite également qu'un liquide ne s'écoule par l'ouverture 2c dans le second volume 2a, ce qui viendrait perturber la mesure. Son caractère hydrophobe évite également qu'un film de liquide ne recouvre de manière permanente la membrane 7 empêchant ainsi la circulation de l'air à travers l'ouverture 2c. À titre d'exemple, il peut s'agir d'une membrane en Téflon, ici sous la forme d'un disque, collée au boîtier. On pourrait toutefois envisager que la membrane soit constituée d'une autre matière ou présente une autre forme sans sortir du cadre de la présente invention.

La paroi principale du boîtier 2 présente une surface tournée vers l'extérieur qui définit un plan principal du boitier 2. Dans l'exemple représenté sur les figures, la membrane 7 est directement assemblée à la paroi principale du boitier 2, c'est-à-dire que la surface d'assemblage de la membrane réside dans le plan principal du boitier 2. L'ouverture 2c et la membrane 7 ne sont donc pas disposées dans un renfoncement ou sur une élévation du boitier 2, ce qui les aurait placées en dehors du plan principal. Dans cette configuration, l'eau ne s'évacue pas naturellement de la membrane 7 ou de son voisinage comme c'est le cas lorsque celle-ci est disposée sur un dôme, en élévation. Le flanc périphérique de la membrane 7 est exposé aux agressions mécaniques extérieures, par exemple aux projections d'eau, ce qui peut conduire au fil du temps à son décollement. Un tel phénomène est réduit lorsque la membrane 7 est disposée dans un renforcement de la paroi principale du boîtier 2 qui rend moins accessible le flanc périphérique de la membrane.

Pour prévenir ces phénomènes dans la configuration d'assemblage de la membrane 7 représentée sur les figures, on a prévu de munir le boîtier 2 d'une pluralité de cloisons 8a, 8b agencées autour de l'ouverture 2c de sorte à protéger le flanc périphérique de la membrane 7. Les cloisons peuvent être disposées perpendiculairement par rapport à la paroi principale du boîtier 2. Les cloisons 8a, 8b sont séparées les unes des autres par des passages permettant l'évacuation des liquides et la circulation de l'air. L'agencement des cloisons 8a, 8b autour l'ouverture 2c est telle que tout le flanc périphérique de la membrane 7 est protégé de l'environnement extérieur par au moins une des cloisons. En d'autres termes, le bord de l'ouverture 2c est entièrement entouré par les cloisons 8a, 8b et toute portion du bord de l'ouverture 2c, et donc du flanc de la membrane 7, est masquée par une au moins des cloisons 8a, 8b. Cette configuration « en labyrinthe » assure à la fois la protection du flanc périphérique de la membrane 7 contre les agressions mécaniques extérieures et prévient l'accumulation de liquide qui peut s'échapper par les passages aménagés entre les cloisons 8a, 8b.

Pour favoriser l'évacuation des liquides, on a également prévu d'aménager au moins une rainure d'écoulement 9 dans la paroi principale du boitier 2, à côté de l'ouverture 2c, de la membrane 7 et des cloisons 8a, 8b. On cherche de cette manière à éviter l'accumulation du liquide, sous la forme d'un film ou de gouttes, autour de l'ouverture 2c et/ou contre les cloisons 8a, 8b, par effet de capillarité. Les deux rainures d'écoulement 9 prévues sur l'exemple représenté permettent de briser la tension de surface du film ou des gouttes de liquide. Ce liquide peut alors s'évacuer, guidé par les rainures 9, et s'écouler par exemple sur les parois latérales du boîtier 2. A cet effet, la rainure ou la pluralité de rainures 9 s'étend sur toute la paroi principale du boîtier pour déboucher au moins d'un côté de cette paroi et avantageusement sur deux côtés ou plus de la paroi.

Dans l'exemple représenté, et comme cela est mieux visible sur la figure 3, la pluralité de cloisons 8a, 8b est constituée d'une première série de cloisons 8a distinctes, ici deux cloisons 8a, et séparées l'une de l'autre par des premiers passages. Elles sont placées à proximité immédiate de l'ouverture 2c et de la membrane 7, c'est-à-dire à une première distance qui est relativement réduite. Ces cloisons 8a ont des sections dans le plan principal qui épousent la forme de la membrane 7, ici des portions de cercle. Ces deux cloisons 8a sont disposées en vis-à-vis l'une de l'autre, de part et d'autre de l'ouverture 2c. Pour protéger les portions du flanc périphériques de la membrane exposées par les passages existant entre les deux cloisons 8a de la première série, on a prévu une deuxième série de cloisons complémentaires 8b, distinctes et séparées des parois 8a de la première série par des passages complémentaires. Ces cloisons complémentaires 8b présentent ici des sections droites dans le plan principal. Elles sont disposées en vis-à-vis l'une de l'autre et des premiers passages, de part et d'autre de l'ouverture 2c et de la membrane 7, pour occulter de l'extérieur les passages existants entre les cloisons 8a de la première série. Les passages complémentaires, entre la première et la deuxième série de cloisons sont réalisés en disposant cette deuxième série de cloisons 8b à une deuxième distance de l'ouverture 2c plus importante que la première distance séparant la première série de cloisons 8a de l'ouverture 2c. Dans cet exemple, on a prévu de former deux rainures d'écoulement 9 dans la paroi principale du boîtier, dans l'espace dégagé entre l'ouverture 2c et les cloisons 8b à section droite de la deuxième série. Les deux rainures 9 s'étendent sur toute la paroi principale pour déboucher sur deux côtés opposés de cette paroi et permettre l'écoulement de l'eau sur les parois latérales.

On pourrait bien entendu prévoir d'autres séries de cloisons, ou les disposer dans le plan principal selon un autre arrangement « en labyrinthe » que celui qui vient d'être décrit, dans la mesure où ces cloisons sont agencées pour entièrement occulter, selon toutes les directions d'approche possible, le flanc périphérique de la membrane 7 de son environnement éloigné et donc entourer entièrement l'ouverture 2c. Les cloisons peuvent avoir d'autres fonctions en complément de la fonction de protection qui vient d'être décrit. Ainsi, dans un exemple de mis en oeuvre non représenté, une au moins des cloisons 8a ou une des cloisons complémentaires 8b peut être formée du flanc vertical du connecteur électrique 6. Cela peut permettre de rendre le boîtier plus compact, en rapprochant l'ouverture 2c, et les cloisons de protection 8a, 8b du connecteur.

Ainsi, en combinant des cloisons de protection 8a, 8b « en labyrinthe » autour de la membrane 7 avec des rainures d'évacuation 9, on peut choisir de positionner la membrane 7 dans le plan principal défini par la paroi du boitier sans risquer de recouvrir cette membrane 7 par une pellicule de liquide ou risquer sa délamination sous l'effet de contraintes mécaniques extérieures.

En protection complémentaire de l'ouverture 2c et de la membrane 7, on a prévu dans le capteur 1 pris en exemple de monter un capot de protection 10 surplombant la membrane 7. Ce capot est ici muni de deux ouvertures dans lesquelles peuvent venir se placer des crans formés sur les faces extérieures des cloisons 8a de la première série. On peut de la sorte facilement clipser le capot 10 au boîtier 2.

Bien entendu l'invention n'est pas limitée au mode de mise en oeuvre décrit et on peut y apporter des variantes de réalisation sans sortir du cadre de l'invention tel que défini par les revendications.

On pourrait par exemple envisager de placer l'ouverture 2c, les cloisons 8a, 8b et les rainures d'évacuation 9 dans un autre plan que le plan principal, sur un dôme ou dans un renfoncement de la paroi principal du boitier 2, et obtenir les mêmes bénéfices que ceux qui ont été exposés.

Par ailleurs, le dispositif électronique n'est pas nécessairement un dispositif de mesure de pression. La présente invention s'applique en effet à tout boitier de protection de tout dispositif électronique, en particulier lorsque celui-ci doit être protégé de son environnement, tout en maintenant une communication avec cet environnement, par exemple pour des raisons d'évacuation de chaleur.

## Revendications

1. Boîtier de protection (2) d'un dispositif électronique (5), le boîtier comprenant une pluralité de parois définissant un logement pour y disposer le dispositif électronique (5), une des parois, dite principale, présentant une ouverture (2c) recouverte d'une membrane étanche (7), pour exposer une partie du dispositif de mesure (5) à la pression atmosphérique, le boîtier (2) étant **caractérisé en ce qu'**il comprend disposées sur la surface extérieure de la paroi principale :
- une pluralité de cloisons (8a, 8b) séparées les unes des autres par des passages et agencées autour de l'ouverture (2c) pour l'entourer entièrement de sorte que toute portion du bord de l'ouverture (2c) est masquée par une au moins des cloisons (8a, 8b) ;
- au moins une rainure d'écoulement (9) disposée à côté de l'ouverture (2c), pour permettre l'évacuation de liquide qui serait susceptible de s'accumuler autour de l'ouverture (2c) et/ou contre les cloisons (8a, 8b).

2. Boîtier de protection (2) selon la revendication précédente dans lequel la surface extérieure de la paroi principale définit un plan principal et dans lequel l'ouverture (2c) est disposée dans ce plan principal.

3. Boîtier de protection (2) selon l'une des revendications précédentes dans lequel les cloisons (8a, 8b) sont perpendiculaires à la paroi principale.

4. Boîtier de protection (2) selon l'une des revendications précédentes dans lequel des cloisons (8a) sont placées à une première distance de l'ouverture (2c) et d'autres cloisons (8b) sont placées à une deuxième distance de l'ouverture (2c), plus grande que la première.

5. Boîtier de protection (2) selon l'une des revendications précédentes dans lequel une première série de cloisons (8a) sont disposés autour de l'ouverture (2c) et sont séparés les unes des autres par des premiers passages, et une seconde série de cloisons (8b) est agencée en vis-à-vis des premiers passages pour que l'ouverture (2c) soit entièrement entourée par les cloisons (8a, 8b).

6. Boîtier de protection (2) selon l'une des revendications précédentes dans lequel la rainure (9) est positionnée entre l'ouverture (2c) et une cloison (8b).

7. Boîtier de protection (2) selon l'une des revendications précédentes dans lequel une au moins des cloisons (8a, 8b) est formée d'un flanc d'un connecteur électrique (6).

8. Capteur de pression (1), notamment pour un réservoir de véhicule automobile, comprenant un corps (3), un dispositif électronique (5) de mesure de pression monté sur le corps (3), un boîtier de protection (2) conforme à l'une des revendications précédentes assemblé au corps (3) .

## Patentansprüche

1. Schutzgehäuse (2) einer elektronischen Vorrichtung (5), das Gehäuse umfassend eine Vielzahl von Wänden, die eine Aufnahme zum Anordnen der elektronischen Vorrichtung (5) darin definieren, wobei eine der Wände, die sogenannte Hauptwand, eine bedeckte Öffnung (2c) einer Dichtmembran (7) zum Aussetzen eines Teils der Messvorrichtung (5) dem Umgebungsluftdruck aufweist, wobei das Gehäuse (2) **dadurch gekennzeichnet ist, dass** es auf der Außenoberfläche der Hauptwand angeordnet umfasst:
- eine Vielzahl von Trennwänden (8a, 8b), die voneinander durch Durchgänge getrennt sind und um die Öffnung (2c) herum eingerichtet sind, um diese ganz zu umgeben, so dass jeder Abschnitt des Rands der Öffnung (2c) durch mindestens eine der Trennwände (8a, 8b) abgedeckt wird;
- mindestens eine Strömungsnut (9), die nahe bei der Öffnung (2c) angeordnet ist, um das Ableiten von Flüssigkeit zu ermöglichen, die dazu neigt, sich um die Öffnung (2c) herum und/oder gegen die Trennwände (8a, 8b) zu sammeln.

2. Schutzgehäuse (2) nach dem vorstehenden Anspruch, wobei die Außenoberfläche der Hauptwand eine Hauptebene definiert und wobei die Öffnung (2c) in dieser Hauptebene angeordnet ist.

3. Schutzgehäuse (2) nach einem der vorstehenden Ansprüche, wobei die Trennwände (8a, 8b) senkrecht zu der Hauptwand sind.

4. Schutzgehäuse (2) nach einem der vorstehenden Ansprüche, wobei die Trennwände (8a) in einem ersten Abstand von der Öffnung (2c) platziert sind und die anderen Trennwände (8b) in einem zweiten Abstand, der größer als der erste ist, von der Öffnung (2c) platziert sind.

5. Schutzgehäuse (2) nach einem der vorstehenden Ansprüche, wobei eine erste Reihe von Trennwänden (8a) um die Öffnung (2c) herum angeordnet sind und voneinander durch die ersten Durchgänge getrennt sind, und eine zweite Reihe von Trennwänden (8b) gegenüber den ersten Durchgängen eingerichtet ist, damit die Öffnung (2c) durch die Trennwände (8a, 8b) ganz umgeben ist.

6. Schutzgehäuse (2) nach einem der vorstehenden Ansprüche, wobei die Nut (9) zwischen der Öffnung (2c) und einer Trennwand (8b) positioniert ist.

7. Schutzgehäuse (2) nach einem der vorstehenden Ansprüche, wobei mindestens eine der Trennwände (8a, 8b) aus einem Flansch eines elektrischen Verbinders (6) ausgebildet ist.

8. Druckfühler (1), insbesondere für einen Tank eines Kraftfahrzeugs, umfassend einen Körper (3), eine elektronische Vorrichtung (5) zum Messen des Drucks, die in den Körper (3) eingebaut ist, ein Schutzgehäuse (2) nach einem der vorstehenden Ansprüche, das an dem Körper (3) montiert ist.

## Claims

1. Protective housing (2) of an electronic device (5), the housing comprising a plurality of walls defining a recess in which to arrange the electronic device (5), one of the walls, referred to as the main wall, having an opening (2c) covered with a sealed membrane (7) for exposing a part of the measuring device (5) to atmospheric pressure, the housing (2) being **characterized in that** it comprises, arranged on the outer surface of the main wall:
- a plurality of partitions (8a, 8b) separated from each other by passages and arranged around the opening (2c) so as to completely surround it in such a way that any portion of the edge of the opening (2c) is concealed by at least one of the partitions (8a, 8b);
- at least one flow groove (9) arranged next to the opening (2c) in order to allow the discharge of liquid which would be likely to accumulate around the opening (2c) and/or against the partitions (8a, 8b).

2. Protective housing (2) according to the preceding claim, wherein the outer surface of the main wall defines a main plane and wherein the opening (2c) is arranged in this main plane.

3. Protective housing (2) according to either of the preceding claims, wherein the partitions (8a, 8b) are perpendicular to the main wall.

4. Protective housing (2) according to any of the preceding claims, wherein some partitions (8a) are placed at a first distance from the opening (2c) and other partitions (8b) are placed at a second distance from the opening (2c) which is greater than the first distance.

5. Protective housing (2) according to any of the preceding claims, wherein a first series of partitions (8a) are arranged around the opening (2c) and are separated from one another by first passages, and a second series of partitions (8b) are arranged facing the first passages such that the opening (2c) is entirely surrounded by the partitions (8a, 8b).

6. Protective housing (2) according to any of the preceding claims, wherein the groove (9) is positioned between the opening (2c) and a partition (8b).

7. Protective housing (2) according to any of the preceding claims, wherein at least one of the partitions (8a, 8b) is formed by a flank of an electrical connector (6).

8. Pressure sensor (1), in particular for a motor vehicle tank, comprising a body (3), an electronic pressure measurement device (5) mounted on the body (3), and a protective housing (2) according to any of the preceding claims joined to the body (3).
